Europäisches Patentamt

European Patent Office

Office européen des brevets

(19)

(11) **EP 0 722 132 B1**

(12) **FASCICULE DE BREVET EUROPEEN**

(45) Date de publication et mention
de la délivrance du brevet:
**22.09.1999 Bulletin 1999/38**

(51) Int Cl.⁶: **G05D 1/02**

(21) Numéro de dépôt: **95402877.5**

(22) Date de dépôt: **19.12.1995**

(54) **Procédé de pilotage d'un aérodyne par asservissement sur une trajectoire horizontale déterminée à partir de points de passage**

Verfahren zur Steuerung eines Flugzeuges durch das Folgen auf einer, mittels Passierpunkten bestimmten horizontalen Flugbahn

Method for piloting an aircraft by tracking a horizontal flight path defined by means of way points

(84) Etats contractants désignés:
**DE GB IT**

(30) Priorité: **16.01.1995 FR 9500555**

(43) Date de publication de la demande:
**17.07.1996 Bulletin 1996/29**

(73) Titulaire: **SEXTANT AVIONIQUE (Société Anonyme)**
**78141 Velizy Villacoublay (FR)**

(72) Inventeur: **Pages, Patrick**
**F-92120 Montrouge (FR)**

(74) Mandataire: **de Saint-Palais, Arnaud Marie et al**
**CABINET MOUTARD**
**35, Avenue Victor Hugo**
**78960 Voisins le Bretonneux (FR)**

(56) Documents cités:
**EP-A- 0 351 654          US-A- 4 224 507**

- **IEEE TRANSACTIONS ON AEROSPACE AND ELECTRONIC SYSTEMS, vol. 26, no. 2, Mars 1990 USA, pages 410-412, E.I. MUELDORF 'The Intersection of a Loxodrome with a Great Circle'**
- **PATENT ABSTRACTS OF JAPAN vol. 00 no. 00 & JP-A-06 347542 (NEC) 22 Décembre 1994,**

## Description

La présente invention concerne un procédé de pilotage d'un aérodyne utilisant les coordonnées géographiques de départ et de destination de l'aérodyne, ainsi que les routes de départ et de destination.

Elle s'applique notamment, mais non exclusivement, aux calculateurs de pilotage automatique installés à bord des aérodynes.
A l'heure actuelle, un tel calculateur effectue le pilotage automatique d'un aérodyne en calculant périodiquement les commandes à appliquer sur les gouvernes de l'aérodyne en fonction de la position et de la route actuelles de l'aérodyne et celles de destination. En fait, ce calcul consiste à déterminer périodiquement les corrections de cap à effectuer pour rallier la position de destination, et à une certaine distance de la position de destination, à déterminer les commandes à appliquer aux gouvernes de manière à mettre l'aérodyne en virage pour lui permettre de rallier la route de destination.

Un calculateur de ce type ne fournit aucune trajectoire au préalable, si bien qu'il est impossible pour le pilote de connaître à l'avance la trajectoire exacte que va suivre l'aérodyne. Dans le cadre de certaines missions de l'aérodyne, l'absence de trajectoire prédéterminée présente de nombreux inconvénients. Ainsi, par exemple, le pilote ne peut pas utiliser de repères visuels au sol pour contrôler sa position et son avance ou son retard par rapport à un horaire. Par ailleurs, le vol à basse altitude est dangereux en l'absence d'une trajectoire prédéterminée. En outre, en cas de zone de menace ou de perturbation météorologique localisée prévue sur la route suivie, il ne peut pas savoir précisément si l'aérodyne va traverser cette zone.

Par ailleurs, la trajectoire d'un aérodyne peut se décomposer en phases de lignes droites et en phases de virages à rayon constant. Lorsque les distances à parcourir sont élevées, les trajectoires suivies par les aérodynes ne peuvent pas être-assimilées à des formes simples du fait de la rotondité de la terre, si bien qu'une phase de ligne droite caractérisée par un vol à cap constant décrit en fait une courbe qui peut être assimilée à une loxodromie. Par conséquent, une telle trajectoire ne peut être élaborée que par des calculs mathématiques complexes, notamment pour déterminer les équations décrivant des loxodromies tangentes à des cercles. Ces calculs nécessitent donc d'importants moyens informatiques, ou ne peuvent être effectués qu'avec une rapidité incompatible avec le contexte temps réel du pilotage d'un aérodyne.

La présente invention a pour but de supprimer ces inconvénients. A cet effet, elle propose un procédé pour le pilotage d'un aérodyne entre une position de départ et une position de destination, chacune de ces deux positions étant définie par une latitude et une longitude et associée à une contrainte de route de passage.

Ce procédé est caractérisé en ce qu'il comprend :

- l'application aux positions de départ et de destination d'une première transformation transformant les loxodromies en lignes droites,
- la construction d'une trajectoire initiale reliant les positions de départ et de destination en respectant les contraintes de route associées à ces points, à l'aide d'arcs de cercles et de segments de droite tangents aux arcs de cercles,
- le calcul des positions respectives de points intermédiaires faiblement espacés de ladite trajectoire à l'aide des équations des arcs de cercles et des segments de droite,
- l'application auxdits points intermédiaires, d'une transformation inverse à ladite première transformation, de manière à déterminer la position de ces points intermédiaires en latitude et longitude, et
- le pilotage de l'aérodyne de manière à ce que sa trajectoire survole chacun desdits points.

Grâce à une telle transformation, on se place dans un repère dans lequel une trajectoire entre deux points peut être définie simplement à l'aide d'arcs de cercles et de segments de droite tangents aux arcs de cercles. Une telle trajectoire permet au pilote de savoir exactement où il va passer en phase de pilotage automatique.

Avantageusement, ladite première transformation consiste à convertir les latitudes des positions de départ et de destination en latitudes croissantes par application d'une première formule de transformation donnant la latitude croissante $L_c$ en fonction de la latitude L :

$$L_c = \ln \left| tg(\frac{L}{2} + \frac{\pi}{4}) \right|$$

ln étant la fonction logarithme népérien, tg la fonction tangente, et L la latitude.

De cette manière, on se place dans un repère de type carte de Mercator, dans lequel les méridiens et les parallèles sont rectilignes et parallèles, les méridiens étant régulièrement espacés et les parallèles perpendiculaires aux méridiens. Dans ce repère, les loxodromies sont transformées en droites, et les cercles restent des cercles en première approximation. Dans ce repère, il est donc facile de déterminer précisément une trajectoire composée d'arcs de cercles tangents à des segments de droites, et à l'aide des équations décrivant ces derniers, les positions respectives de points faiblement espacés appartenant à cette trajectoire.

Selon une particularité de l'invention, la trajectoire d'un aérodyne entre deux points est définie par deux arcs de cercles passant par les positions de départ et de destination et un segment de droite tangent aux deux arcs de cercles.

Avantageusement, le procédé selon l'invention comprend le calcul en chaque point dudit ensemble, de la route permettant de rallier le point suivant, le pilotage de l'aérodyne consistant à commander les gouvernes de l'aérodyne dans le but de réduire l'écart de route avec celle du point suivant, et à réduire l'écart entre la position de l'aérodyne et ladite trajectoire.

Un mode de réalisation du procédé selon l'invention sera décrit ci-après, à titre d'exemple non limitatif, avec référence aux dessins annexés dans lesquels :

La figure 1 représente schématiquement une trajectoire d'un aérodyne entre deux points géographiques ;

La figure 2 montre la même trajectoire que celle représentée sur la figure 1, mais exprimée en longitude et latitude croissante ;

La figure 3 illustre une méthode d'asservissement du pilotage de l'aérodyne sur une trajectoire déterminée par un ensemble de points ;

La figure 4 représente schématiquement un dispositif permettant la mise en oeuvre du procédé selon l'invention.

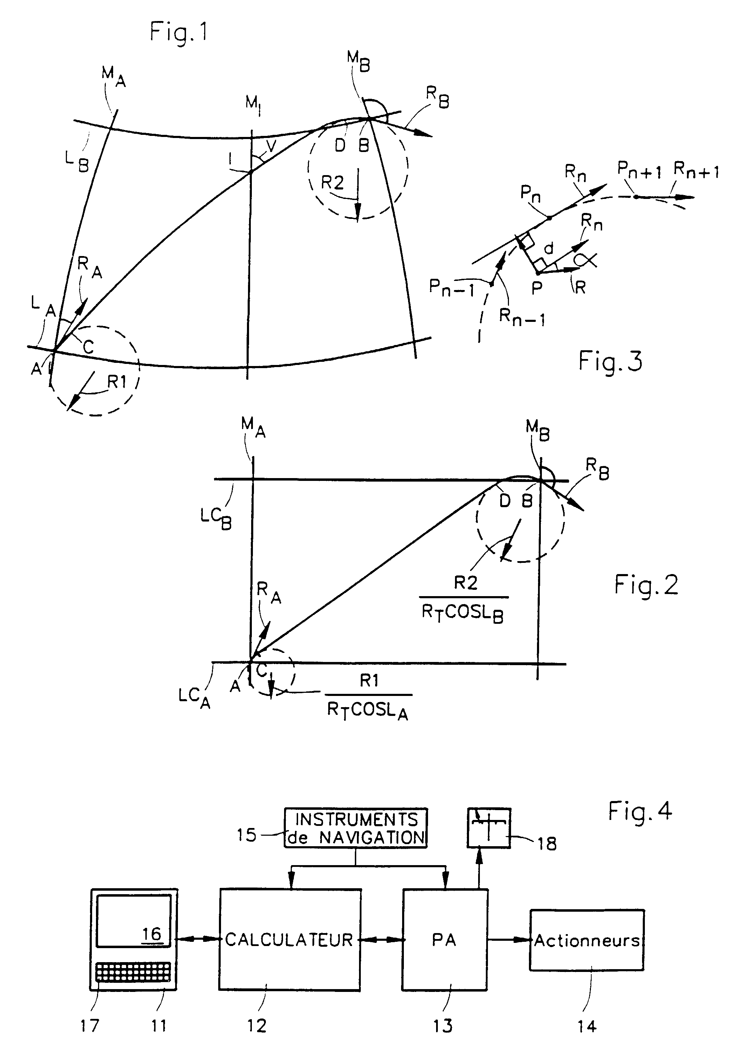

La figure 1 représente une portion de trajectoire d'un aérodyne entre un point A et un point B, ces deux points devant être survolés suivant des routes de passage respectives $R_A$ et $R_B$. Le point A se situe sur le méridien $M_A$ et sur le parallèle $L_A$, tandis que le point B se situe sur le méridien $M_B$ et le parallèle $L_B$.

Pour rallier le point A au point B en respectant les contraintes de route $R_A$ et $R_B$, l'aérodyne décrit une trajectoire comprenant une phase de "virage de ralliement" A-C décrivant un arc de cercle de rayon projeté sur le sol constant, puis une phase de "ligne droite" C-D décrivant une trajectoire à cap constant (loxodromie) ou à angle de roulis nul (orthodromie), et enfin une phase de "virage de capture" D-B décrivant un arc de cercle de rayon projeté sur le sol constant.

Une phase de "ligne droite" de type loxodromie peut être modélisée par l'équation différentielle suivante:

$$dM = tg\ V \times \frac{dL}{\cos L} \qquad (1)$$

où dM est le différentiel de longitude, dL le différentiel de latitude, L la latitude du point considéré de la loxodromie et V le cap de la loxodromie, c'est-à-dire l'angle formé par la loxodromie en un point quelconque avec un méridien $M_I$. Si l'on pose :

$$dL_c = \frac{dL}{\cos L} \qquad (2)$$

$L_c$ étant appelée latitude croissante, on obtient après intégration de l'équation différentielle (1), puisque V est constant :

$$\Delta M = tg\ V \times \Delta L_c \qquad (3)$$

avec, après intégration de l'équation (2) :

$$L_c = \ln\left|tg\left(\frac{L}{2} + \frac{\pi}{4}\right)\right| \qquad (4)$$

Il résulte de l'équation (3) que, dans un repère orthonormé $(L_c, M)$, l'image d'une phase de "ligne droite" est donc une droite.

En ce qui concerne les phases de virage A-C et D-B, un cercle de rayon R a pour équation dans un repère métrique $(X_{est}, X_{nord})$ :

$$\Delta X^2_{est} + \Delta X^2_{nord} = R^2 \qquad (5)$$

Pour passer d'un repère de coordonnées en latitude et longitude (L,M) vers un repère de coordonnées en latitude croissante et longitude $(L_c, M)$, il convient d'appliquer les équations différentielles suivantes :

$$dX_{est} = R_T \times \cos L \times dM \qquad (6)$$

$$dX_{nord} = R_T \times \cos L \times dL_c \qquad (7)$$

où $R_T$ est le rayon terrestre.

Or les rayons de virage sont généralement inférieurs à une dizaine de kilomètres. Loin des pôles, on peut donc considérer que le terme cos L est constant sur tout le virage. Par conséquent, on peut faire les approximations suivantes :

$$\Delta X_{est} = R_T \times \cos L \times \Delta M \qquad (8)$$

$$\Delta X_{nord} = R_T \times \cos L \times \Delta L_c \qquad (9)$$

En remplaçant $\Delta X_{est}$ et $\Delta X_{nord}$ donnés par les équations (8) et (9) dans l'équation du cercle, (5) on obtient :

$$\Delta L_c^2 + \Delta M^2 = \left(\frac{R}{R_T \times \cos L}\right)^2 \qquad (10)$$

Dans un repère $(L_c, M)$ orthonormé, l'image d'un cercle de rayon R est donc proche d'un cercle de rayon :

$$\frac{R}{R_T \times \cos L} \qquad (11)$$

Pour déterminer une trajectoire d'un aérodyne entre les points A et B, par application du procédé selon l'invention, il suffit donc de convertir les latitudes des points de passage A et B en latitudes croissantes en appliquant l'équation (4).

Il s'agit ensuite de construire une trajectoire comme représenté sur la figure 2, de manière à relier le point A de coordonnées $(L_{CA}, M_A)$ au point B de coordonnées $(L_{CB}, M_B)$, en commençant par définir deux arcs de cercles A-C et D-B tangents respectivement en A et B aux directions $R_A$ et $R_B$. Pour chaque arc de cercle, le choix du cercle, droit ou gauche, par rapport à la direction $R_A$ ou $R_B$ et son rayon sont déterminés à l'aide d'un algorithme connu utilisant notamment la vitesse et l'altitude de l'aérodyne, ainsi que la position du point suivant à atteindre par rapport à celle du point précédent.

Il suffit enfin de relier les deux arcs de cercles AC et DB par un segment de droite tangent en C et D aux deux arcs de cercles, les angles respectifs des deux arcs de cercles étant déterminés de manière à ce que ces derniers soient tangents au segment de droite C-D.

L'étape suivante du procédé selon l'invention consiste à calculer un ensemble de points intermédiaires équidistants, par exemple d'une distance inférieure à 500 mètres, de la trajectoire A-C-D-B ainsi déterminée, puis à convertir les latitudes croissantes respectives de ces points en latitudes, par application de la formule inverse de l'équation (4), donnant la latitude en fonction de la latitude croissante, à savoir :

$$L = 2 \times \text{Arctg}(e^{L_c}) - \frac{\pi}{2} \qquad (12)$$

On calcule la contrainte de route pour chaque point intermédiaire dudit ensemble, cette route étant constante et égale à V sur les portions de ligne droite.

Il s'agit ensuite d'asservir le pilotage de l'aérodyne sur la trajectoire ainsi déterminée.

Cette opération d'asservissement peut être effectuée soit manuellement par le pilote grâce à l'affichage d'une barre de tendance lui indiquant les corrections de cap à effectuer pour rallier et suivre cette trajectoire.

Elle peut également être effectuée par le dispositif de pilotage automatique de l'aérodyne qui détermine et applique périodiquement des commandes de correction aux gouvernes de l'aérodyne pour lui faire suivre une trajectoire tangente à la trajectoire prédéterminée, afin de réduire l'écart entre celle-ci et la position de l'aérodyne.

Pour cela, le calculateur du dispositif de pilotage automatique qui commande également l'affichage de la barre de tendance, détermine parmi l'ensemble de points intermédiaires précédemment déterminé, définissant la trajectoire à suivre par l'aérodyne dans un repère exprimé en latitude et longitude (L,M), le point $P_n$ suivant à survoler, en fonction de la position P de l'aérodyne (figure 3).

Il calcule l'écart latéral d entre la position P de l'aérodyne et l'axe passant par le point $P_n$ et orienté suivant la contrainte de route $R_n$ associée au point $P_n$, et l'écart angulaire $\alpha$ de route entre le cap R suivi par l'aérodyne et la contrainte de route $R_n$.

Puis il calcule les consignes à appliquer aux gouvernes visant à annuler l'écart latéral d et l'écart angulaire $\alpha$ de route, de manière à décrire une trajectoire de rejointe composée si nécessaire d'un virage de ralliement, d'un segment de droite et d'un virage de capture.

Dans le cas où le pilote passe en pilotage manuel, le calculateur détermine périodiquement une trajectoire de rejointe vers la trajectoire préalablement définie, et lors du passage en pilotage automatique, l'asservissement du pilotage de l'aérodyne sur la dernière trajectoire de rejointe calculée au cours du pilotage manuel, et lorsque l'aérodyne a rejoint la trajectoire préalablement déterminée A-C-D-B, l'asservissement du pilotage de l'aérodyne sur cette dernière.

Le procédé selon l'invention peut être mis en oeuvre par un dispositif tel que celui représenté sur la figure 4.

Ce dispositif comprend un terminal 11 de communication homme/processeur comportant un organe de commande, comme par exemple, un clavier 17 permettant au pilote de saisir les données relatives à la mission à effectuer.

Une telle mission comprend notamment un plan de vol défini par un ensemble de points géographiques définis chacun par une position (L,M) et éventuellement associés à une contrainte de route R. Ces données sont envoyées à un calculateur 12 qui élabore conformément au procédé selon l'invention, les trajectoires à suivre respectivement entre chacun des points introduits par le pilote, en respectant les contraintes de route associées à ces points, chacune de ces trajectoires étant définie par un ensemble de points faiblement espacés relativement aux points introduits par le pilote.

Le calculateur 12 est raccordé aux instruments de navigation 15 embarqués à bord de l'aérodyne, de manière à recevoir en temps réel les informations de navigation, et notamment la position P et le cap R de l'aérodyne, en vue de déterminer le point suivant $P_n$ à atteindre de la trajectoire prédéterminée A-C-D-B, et de calculer des trajectoires de rejointe en phase de pilotage manuel.

Le calculateur 12 est également raccordé au dispositif de pilotage automatique 13 de l'aérodyne pour lui fournir, à tout instant en phase de pilotage automatique, la position $(L_n, M_n)$ et la route $R_n$ du point $P_n$ suivant à atteindre.

Le dispositif de pilotage automatique 13 est par ailleurs relié aux instruments de navigation 15 pour calculer les consignes à appliquer aux gouvernes en fonction de la position et du cap de l'aérodyne, et aux actionneurs 14 des gouvernes pour exécuter les consignes ainsi calculées. Il est également connecté à un afficheur de barre de tendance 18 indiquant au pilote en phase de pilotage manuel, les commandes de pilotage à effectuer pour rallier et suivre une trajectoire prédéterminée.

Le terminal 11 comprend en outre un écran de visualisation 16 permettant au pilote de visualiser la trajectoire telle qu'elle a été élaborée par le calculateur 12, ainsi que la position de l'aérodyne à tout instant, par rapport à cette trajectoire.

## Revendications

1. Procédé pour le pilotage d'un aérodyne entre une position de départ (A) et une position de destination (B), chacune de ces deux positions étant définie par une latitude ($L_A$, $L_B$) et une longitude ($M_A$, $M_B$) et associée à une contrainte de route de passage ($R_A$, $R_B$), caractérisé en ce qu'il comprend :

   - l'application aux positions de départ (A) et de destination (B) d'une première transformation transformant les loxodromies (C-D) en lignes droites,
   - la construction d'une trajectoire initiale (A-C-D-B) reliant les positions de départ (A) et de destination (B) en respectant les contraintes de route ($R_A$, $R_B$) associées à ces points, à l'aide d'arcs de cercles (A-C, D-B) et de segments de droite (C-D) tangents aux arcs de cercles,
   - le calcul des positions respectives de points intermédiaires ($P_n$) faiblement espacés sur ladite trajectoire initiale à l'aide des équations des arcs de cercles (A-C, D-B) et des segments de droite (C-D),
   - l'application auxdits points intermédiaires ($P_n$), d'une transformation inverse à ladite première transformation, de manière à déterminer la position de ces points intermédiaires en latitude et longitude, et
   - le pilotage de l'aérodyne de manière à ce que sa trajectoire survole chacun desdits points intermédiaires ($P_n$).

2. Procédé selon la revendication 1, caractérisé en ce que ladite première transformation consiste à convertir les latitudes ($L_A$, $L_B$) des positions de départ (A) et de destination (B) en latitudes croissantes par application de la formule de transformation donnant la latitude croissante $L_c$ en fonction de la latitude L :

$$L_c = \ln\left|tg\left(\frac{L}{2} + \frac{\pi}{4}\right)\right|$$

ln étant la fonction logarithme népérien, tg la fonction tangente, et L la latitude,

3. Procédé selon la revendication 1 ou 2, caractérisé en ce que ladite trajectoire initiale (A-C-D-B) comprend deux arcs de cercles (A-C, D-B) passant par les positions de départ (A) et de destination (B) tangents respectivement auxdites contraintes de route ($R_A$, $R_B$) associées, et un segment de droite (C-D) tangent aux deux arcs de cercles.

4. Procédé selon l'une des revendications précédentes, caractérisé en ce qu'il comprend l'assistance au pilotage de l'aérodyne consistant à indiquer au pilote de l'aérodyne les manoeuvres à effectuer pour suivre une trajectoire tangente à ladite trajectoire initiale (A-C-D-B), afin de réduire l'écart entre la position de l'aérodyne (P) et ladite trajectoire initiale.

5. Procédé selon l'une des revendications précédentes, caractérisé en ce qu'il comprend le pilotage automatique de l'aérodyne consistant à commander les gouvernes de l'aérodyne de manière à suivre une trajectoire tangente à ladite trajectoire initiale (A-C-D-B), afin de réduire l'écart entre la position de l'aérodyne (P) et ladite trajectoire initiale.

6. Procédé selon l'une des revendications précédentes, caractérisé en ce qu'il comprend le calcul en chaque point intermédiaire ($P_n$), de la route ($R_n$) permettant de rallier le point suivant ($P_{n+1}$).

7. Procédé selon la revendication 6, caractérisé en ce qu'il comprend le calcul périodique de la distance (d) entre la position (P) de l'aérodyne et un axe passant par le point intermédiaire suivant ($P_n$) à survoler de ladite trajectoire (A-C-D-B), et orienté suivant la route ($R_n$) associée audit point suivant, le calcul périodique d'un écart de route ($\alpha$) entre la route (R) de l'aérodyne et la route ($R_n$) associée audit point intermédiaire suivant ($P_n$), et le pilotage de l'aérodyne de manière à réduire ladite distance (d) et l'écart angulaire ($\alpha$).

8. Procédé selon l'une des revendications précédentes, caractérisé en ce qu'il comprend l'affichage sur l'écran de visualisation (16) d'un terminal (11), de ladite trajectoire initiale, ainsi que l'affichage en temps réel de la position (P) de l'aérodyne par rapport à ladite trajectoire (A-C-D-B).

9. Procédé selon l'une des revendications précédentes, caractérisé en ce qu'il comprend une phase de pilotage manuel au cours de laquelle est élaborée périodiquement une trajectoire de rejointe de ladite trajectoire initiale (A-C-D-B), définie par un ensemble de points faiblement espacés, et lors du passage en phase de pilotage automatique, le pilotage automatique de l'aérodyne de manière à ce que sa trajectoire survole chacun des points de la trajectoire de rejointe.

10. Procédé selon la revendication 9,
caractérisé en ce qu'il comprend l'affichage en temps réel sur l'écran (16) de visualisation d'un terminal (11), de la dernière trajectoire de rejointe déterminée, de ladite trajectoire initiale (A-C-D-B), ainsi que de la position (P) de l'aérodyne par rapport aux trajectoires affichées.

11. Procédé selon l'une des revendications précédentes,
caractérisé en ce qu'il comprend l'introduction dans un terminal d'un plan de vol comprenant une succession de positions géographiques respectives de points de passage, chacun étant associé à une contrainte de route, et la détermination d'une trajectoire entre chacun desdits points de passage, respectant les contraintes de route associées à ces points, en calculant les positions respectives de points intermédiaires faiblement espacés relativement auxdits points de passage.

12. Procédé selon l'une des revendications précédentes,
caractérisé en ce que lesdits points intermédiaires sont espacés de moins de 500 mètres.

**Patentansprüche**

1. Verfahren zur Steuerung eines Luftfahrzeugs zwischen einer Startposition (A) und einer Zielposition (B), wobei jede dieser beiden Positionen durch eine Breite ($L_A$, $L_B$) und eine Länge ($M_A$, $M_B$) festgelegt und einer Durchgangsrouten-Begrenzung ($R_A$, $R_B$) zugeordnet ist,
dadurch gekennzeichnet, daß es folgendes umfaßt:

- die Anwendung einer ersten Umwandlung auf die Startposition (A) und die Zielposition (B), wodurch die Loxodrome (C-D) in gerade Linien umgewandelt werden,
- die Erzeugung einer Ausgangsstrecke (A-C-D-B), welche die Startposition (A) und die Zielposition (B) miteinander verbindet und dabei die diesen Punkten zugeordneten Routenbedingungen ($R_A$, $R_B$) berücksichtigt, mit Hilfe von Kreisbögen (A-C, D-B) und von Geradenabschnitten (C-D), welche die Kreisbögen tangieren,
- die Berechnung der entsprechenden Positionen von Zwischenpunkten ($P_n$) die in geringer Entfernung zueinander auf der Ausgangsstrekke angeordnet sind, mit Hilfe der Gleichungen der Kreisbögen (A-C, D-B) und der Geradenabschnitte (C-D),
- die Anwendung einer zur ersten Umwandlung umgekehrten Umwandlung auf die Zwischenpunkte ($P_n$), um die Position dieser Zwischenpunkte in Breite und Länge zu bestimmen, und
- die Steuerung des Luftfahrzeugs derart, daß seine Strecke jeden dieser Zwischenpunkte ($P_n$) überfliegt.

2. Verfahren nach Anspruch 1, dadurch gekennzeichnet, daß die erste Umwandlung darin besteht, die Breiten ($L_A$, $L_B$) der Startposition (A) und der Zielposition (B) in aufsteigende Breiten umzuwandeln, und zwar durch Anwendung der Umwandlungsformel, welche die aufsteigende Breite $L_c$ in Abhängigkeit von der Breite L ergibt:

$$L_c = \ln \left| tg \, \frac{L}{2} + \frac{\pi}{4} \right|$$

wobei ln die natürliche Logarithmusfunktion, tg die Tangentenfunktion und L die Breite ist.

3. Verfahren nach Anspruch 1 oder 2, dadurch gekennzeichnet, daß die Ausgangsstrecke (A-C-D-B) zwei Kreisbögen (A-C, D-B), die durch die Startposition (A) und durch die Zielposition (B) verlaufen und jeweils die zugeordneten Routenbegrenzungen ($R_A$, $R_B$) berühren, und einen Geradenabschnitt (C-D) umfaßt, der die beiden Kreisbögen berührt.

4. Verfahren nach einem der vorhergehenden Ansprüche, dadurch gekennzeichnet, daß es die Unterstützung der Steuerung des Luftfahrzeugs umfaßt, die darin besteht, dem Piloten des Luftfahrzeugs die Manöver anzugeben, die auszuführen sind, um einer Strecke zu folgen, welche die Ausgangsstrekke (A-C-D-B) berührt, um den Abstand zwischen der Position des Luftfahrzeugs (P) und der Ausgangsstrecke zu verringern.

5. Verfahren nach einem der vorhergehenden Ansprüche, dadurch gekennzeichnet, daß es die automatische Steuerung des Luftfahrzeugs umfaßt, die darin besteht, daß man die Steuerungen des Luftfahrzeugs so betätigt, daß man einer Strecke folgt, welche die Ausgangsstrecke (A-C-D-B) berührt, um den Abstand zwischen der Position des Luftfahrzeugs (P) und der Ausgangsstrecke zu verringern.

6. Verfahren nach einem der vorhergehenden Ansprüche, dadurch gekennzeichnet, daß es an jedem Zwischenpunkt ($P_n$) die Berechnung der Route ($R_n$) umfaßt, die ein Anfliegen des nächsten Punktes ($P_{n+1}$) ermöglicht.

**7.** Verfahren nach Anspruch 6, dadurch gekennzeichnet, daß es die periodische Berechnung der Entfernung (d) zwischen der Position (P) des Luftfahrzeugs und einer Achse, die durch den nächsten zu überfliegenden Zwischenpunkt ($P_n$) der Strecke (A-C-D-B) verläuft und gemäß der dem nächsten Punkt zugeordneten Route ($R_n$) ausgerichtet ist, die periodische Berechnung eines Routenabstandes ($\alpha$) zwischen der Route (R) des Luftfahrzeugs und der dem nächsten Zwischenpunkt ($P_n$) zugeordneten Route ($R_n$), und die Steuerung des Luftfahrzeugs derart umfaßt, daß die Entfernung (d) und der Phasenwinkel ($\alpha$) verringert werden.

**8.** Verfahren nach einem der vorhergehenden Ansprüche, dadurch gekennzeichnet, daß es die Anzeige der Ausgangsstrecke sowie die Echtzeitanzeige der Position (P) des Luftfahrzeugs in bezug auf die Strecke (A-C-D-B) auf dem Anzeigebildschirm (16) eines Terminals (11) umfaßt.

**9.** Verfahren nach einem der vorhergehenden Ansprüche, dadurch gekennzeichnet, daß es eine manuelle Steuerphase, in deren Verlauf periodisch eine Verbindungsstrecke zur Ausgangsstrecke (A-C-D-B) erzeugt wird, die durch eine Gruppe von leicht beabstandeten Punkten festgelegt ist, und beim Übergang in die automatische Steuerphase die automatische Steuerung des Luftfahrzeugs derart umfaßt, daß dessen Strecke jeden der Punkte der Verbindungsstrecke überfliegt.

**10.** Verfahren nach Anspruch 9, dadurch gekennzeichnet, daß es die Echtzeitanzeige der letzten bestimmten Verbindungsstrecke, der Ausgangsstrecke (A-C-D-B) sowie der Position (P) des Luftfahrzeugs in bezug auf die angezeigten Strecken auf dem Anzeigebildschirm (16) eines Terminals (11) umfaßt.

**11.** Verfahren nach einem der vorhergehenden Ansprüche, dadurch gekennzeichnet, daß es die Eingabe eines Flugplans mit einer Aufeinanderfolge entsprechender geographischer Positionen von Durchgangspunkten, von denen jeder einer Routenbegrenzung zugeordnet ist, in ein Terminal und die Bestimmung einer Strecke zwischen jeder dieser Durchgangspunkte unter Berücksichtigung der diesen Punkten zugeordneten Routenbegrenzungen umfaßt, wobei die entsprechenden Positionen relativ zu den Durchgangspunkten leicht beabstandeter Zwischenpunkte berechnet werden.

**12.** Verfahren nach einem der vorhergehenden Ansprüche, dadurch gekennzeichnet, daß die Zwischenpunkte weniger als 500 m voneinander entfernt sind.

**Claims**

**1.** Method for piloting an aerodyne between a departure position (A) and a destination (B) position, each of these two positions being defined by a latitude ($L_A$, $L_B$) and a longitude ($M_A$, $M_B$) and associated with a transition route constraint ($R_A$, $R_B$), said method comprising :

- the application to the departure (A) and destination (B) positions of a first transformation transforming the rhumb lines (C-D) into straight lines,
- the construction of an initial path (A-C-D-B) joining the departure (A) and destination (B) positions while complying with the route constraints ($R_A$, $R_B$) associated with these points, by means of arcs of circles (A-C, D-B) and segments of straight lines (C-D) tangential to the arcs of circles,
- the computation of the respective positions of the intermediate points ($P_n$) spaced not far apart on said path by means of the equations of the arcs of circles (A-C, D-B) and straight line segments (C-D),
- the application to said intermediate points ($P_n$), of a transformation that is the reverse of said first transformation, so as to determine the position of these intermediate points in terms of latitude and longitude, and
- the piloting of the aerodyne so that its path flies over each of said intermediate points ($P_n$).

**2.** Method according to claim 1, wherein said first transformation consists in converting the latitudes ($L_A$, $L_B$) of the departure (A) and destination (B) positions into increasing latitudes by applying the transformation formula stating the increasing latitude $L_c$ as a function of the latitude L :

$$L_c = \ln \left| tg\, \frac{L}{2} + \frac{\pi}{4} \right|$$

ln being the natural logarithm function, tg being the tangent function and L the latitude.

**3.** Method according to one of the claims 1 or 2, wherein said initial path (A-C-D-B) comprises two arcs of circles (A-C, D-B) passing through the departure (A) and destination (B) positions respectively tangential to said associated route constraints ($R_A$, $R_B$), and a segment of a straight line (C-D) tangential to both arcs of circles.

**4.** Method according to one of the preceding claims, comprising assistance in the piloting of the aerodyne by indicating to the aerodyne pilot the manoeuvres to be performed in order to follow a path at a tangent to said initial path (A-C-D-B), in order to reduce the variance between the position of the aerodyne (P) and said initial path.

5. Method according to one of the preceding claims, comprising the automatic piloting of the aerodyne consisting in commanding the control surfaces of the aerodyne to follow a path at a tangent to said initial path (A-C-D-B), in order to reduce the variance between the position of the aerodyne (P) and said initial path.

6. Method according to one of the preceding claims, comprising the computation, at each intermediate point ($P_n$), of the route ($R_n$) enabling the next point to be reached ($P_n + 1$).

7. Method according to claim 6, comprising the periodic computation of the distance (d) between the position (P) of the aerodyne and an axis running through the next intermediate point ($P_n$) to be flown over on said path (A-C-D-B), and oriented in accordance with the route ($R_n$) associated with said next point, the periodic computation of a route variance ($\alpha$) between the route (R) of the aerodyne and the route ($R_n$) associated with said next intermediate point ($P_n$), and the piloting of the aerodyne so as to reduce said distance (d) and the angular variance ($\alpha$).

8. Method according to one of the preceding claims, comprising the displaying, on the viewing screen (16) of a terminal (11), of said initial path, as well as real-time displaying of the position (P) of the aerodyne in relation to said path (A-C-D-B).

9. Method according to one of the preceding claims, comprising a manual piloting phase during which a path rejoining said initial path (A-C-D-B) is periodically devised, said rejoining path being defined by a set of points not far apart, and, when the automatic piloting phase is activated, the automatic piloting of the aerodyne such that its path flies over each of the points on the rejoining path.

10. Method according to claim 9, comprising the real-time displaying on the viewing screen (16) of a terminal (11), of the last rejoining path determined, of said initial path(A-C-D-B), and of the position (P) of the aerodyne in relation to the paths displayed.

11. Method according to one of the preceding claims, comprising the entering, into a terminal, of a flight plan comprising a succession of respective geographical positions of way points, each one being associated with a route constraint, and the determining of a path between each of said way points, while complying with the route constraints associated with these points, by computing the respective positions of intermediate points not far apart in relation to said way points.

12. Method according to one of the preceding claim, wherein said intermediate points are spaced less than 500 meters apart.

Fig.1

Fig.3

Fig.2

$$\frac{R2}{R_T COS L_B}$$

$$\frac{R1}{R_T COS L_A}$$

Fig.4

INSTRUMENTS
de NAVIGATION

15

18

16

CALCULATEUR

PA

Actionneurs

17    11    12    13    14

9